# EUROPEAN PATENT APPLICATION

(11) **EP 2 894 426 A1**
(43) Date of publication of application: **15.07.2015**
(21) Application number: 14000119.9
(22) Date of filing: 14.01.2014
(51) Int. Cl.: F27D 19/00, G06Q 10/06

(54) **Method for scheduling a production process**

(71) Applicant: ABB Technology AG, 8050 Zürich (CH)
(72) Inventor: Nussbaum, Axel, 79664 Wehr (DE); Darling, Elizabeth, Austin TX (US); Saynevirta, Simo, 02170 Espoo (FI); Atkins, Steve, Basel 4052 (CH); Kymäläinen, Toni, 00520 Helsinki (FI); Harjunkoski, liro, Dr., 69469 Weinheim (DE)
(74) Representative: Kock, Ina

(57) **Abstract**

The invention is related to a method for scheduling a production process within a production system (10), the system comprising a calculation unit (12) for performing the steps of the method at least in part, production means (14, 16, 18, 20, 24, 26) with the capability to get the physical production process behind them optimized either concerning a decreased production time (62) or an increased efficiency (64) and electrical energy supply means (28, 30, 32, 34) for supplying at least the production means (14, 16, 18, 20, 24, 26) with electrical energy, wherein the availability (82, 102, 132) of the energy supply means (28, 30, 32, 34) might differ (84, 104, 134) in short-term from a respective long-term schedule. The method is characterized by the following steps: continuously providing a characteristic value (42) for describing the actual availability (48), the expected forthcoming short-term availability (52) and at least in part the scheduled long-term availability (50) of the energy supply means (28, 30, 32, 34) to the calculation unit, in case of an unscheduled forthcoming (a) reduction, or (b) increase in short-term availability of the energy supply means: optimizing at least one of the production means (14, 16, 18, 20, 24, 26) concerning a decreased production time instead of optimizing concerning increased efficiency, so that a timespan (110, 114, 122) with reduced or without energy consumption from the at least one production means (14, 16, 18, 20, 24, 26) is obtained therewith, scheduling the production means (14, 16, 18, 20, 24, 26) in that way, that the time span (110, 114, 122) with reduced or without energy consumption prefer-ably takes place (a) in times of reduced energy supply means or (b) after times of increased availability of energy supply means.

## Description

The invention relates to a method for scheduling a production process within a production system, the system comprising:
- a calculation unit for performing the steps of the method at least in part,
- production means with the capability to get the physical production process behind them optimized either concerning a decreased production time or an increased efficiency,
- electrical energy supply means for supplying at least the production means with electrical energy,
- wherein the availability of the energy supply means might differ in short-term from a respective long-term schedule.

In the future the energy supply will vary more than today owing to the increased use of variable respectively renewable energy sources (solar, wind, wave, etc.). The electricity grid will likely become more intelligent to support rapid changes in local variable production thus avoiding unnecessary transfer losses and avoiding some grid reinforcement. Many industrial processes can be seen as "virtual power plants" that may "produce" energy by reducing already committed loads. At other times they can potentially increase production to help consume excess energy supply from renewable or other energy sources. Thus, flexibility in electricity consumption may be economically and environmentally beneficial and large energy users can act as balancing power.

Although a number of approaches to demand side management exist and have been used in industry to varying degrees for many years, they have tended to focus on optimizing the relevant parts individually. Thus there are several approaches for optimizing industrial demand response, for instance methodical approaches, which are typically realized by control software, such as:
- Load planning,
- Load shedding (cutting the production levels to meet the targets),
- Load optimization (increase / reduce the current production load),
- Load shifting (reschedule the production to adapt the sequence of products such that they match in a best way the electricity available),

In addition an industrial production process also might be optimized by improved hardware solutions, which provide an increased efficiency of the physical production process as such. Examples for such hardware related solutions are:
- Hardware equipment that creates energy and time savings in a process and can also speed up certain production stages by more efficient processing,
- A control solution that enables higher productivity by also increasing the possible energy intake in an equipment-friendly way. This leads to shorter processing times and consequently also into smaller energy losses as well as better equipment utilization.

A typical - but not limiting - example for such a production process can be found in a steel meltshop. The main optimization components are for the steel meltshop for example:
- scheduling of production blocks,
- energy management,
- hardware equipment for a more efficient arc,
- control solution for a more efficient arc.

It is, however, not trivial to realize the optimization potential in practice due to many *process and production constraints* as *well* as *due to a given "inertia" in the produc*tion. For example, production that is already running will partially limit the flexibility of the immediate future decisions as unwanted changes in the production may lead to quality problems or into a significant loss of energy.

The challenge with these state of the art of optimization techniques is that the hardware and software (HW&SW) solutions discussed here are commonly decoupled and sometimes even working in a "competitive" manner, i.e. they are partly even working against active collaboration.

The objective of the invention is to provide a method for scheduling a production process within a production system, which coordinates both hardware and software (HW&SW) solutions and enables earlier uncovered potential to increase the flexibility of production processes with regard to electricity consumption.

This problem is solved by a method of the aforementioned kind. This is characterized by the following steps:
- continuously providing a characteristic value for describing the actual availability, the expected forthcoming short-term availability and at least in part the scheduled long-term availability of the energy supply means to the calculation unit,
- in case of an unscheduled forthcoming (a) reduction, or (b) increase in short-term availability of the energy supply means: optimizing at least one of the production means concerning a decreased production time instead of optimizing concerning increased efficiency, so that a time-span with reduced or without energy consumption from the at least one production means is obtained therewith,
- scheduling the production means in that way, that the time span with reduced or without energy consumption preferably takes place (a) in times of reduced energy supply means or (b) after times of increased availability of energy supply means.

The basic idea of the invention consists in providing especially an increased short-term flexibility of the energy demand of a production plant by use of a hardware solution and to integrate this flexibility in a superordinated long term scheduling system.

Since electrical energy is storable only in a very limited way, the generation of electrical energy has to meet the demand of the electrical loads at each time of each day. The load curve of the different loads within an electrical energy supply network typically follows certain rules, dependent for example on the time over the day and the season of the year. During nighttime the load curve is typically lower than during daytime and in wintertime the load curve is typically higher than in summer time.

Thus - based on the typical load curves - the energy supply means are typically scheduled long-term such that the availability of the respective energy supply means meets the estimated demand of the loads. If an energy supply means is scheduled to be available it is foreseen to produce electrical energy for the scheduled time-span. Such a long term schedule might be for example for a time-span of 6 hours, 1 day or even several days in advance. Hence it is possible to schedule the availability of the most efficient energy supply means, which normally have a rather long time constant such as 6 hours or more, in such a way that they are used as much as possible. A reduced consumption of resources for energy supply is obtained therewith.

On the other side renewable energy supply means are subject to short-term deviations from their long-term schedule, for example due to unexpected weather conditions (clouds, wind, etc.). Based on the increased share of renewable energies, which have to be preferably used upon their availability due to environmental reasons, the whole long-term scheduled availability of energy supply means is subject to a short-term uncertainty, wherein short-term means for example a time span of 2 hours or less.

According to the invention the physical process of the production can be either optimized concerning efficiency or concerning time. It is also possible, that this is no clear "either or" decision, moreover a production process can be optimized at the same time concerning both criteria, but more with respect to one parameter than with respect to the other parameter. In the case that the availability of the energy supply means is in line with the long-term schedule of the energy supply means the physical process is usually optimized in that way, that it has the highest efficiency.

By activating a hardware system for optimization, the energy consumption of a critical processing step can be reduced and through better processing the duration can also be reduced. It can be in principle selected whether to only lower the energy consumption and maintain the processing time or to use the full flexibility to shorten the processing time as much as possible and therefore keep the energy demand constant. A combination of all these two options can also be realized, which contributes to a flexibility pool.

Similar targets can be reached by a control solution that can stabilize the production leading to lower energy demand or allows increasing the process capacity by enabling a higher energy intake, which makes a faster processing rate possible. From the energy point of view, the solution can either reduce the energy consumption or increase it resulting into a shorter processing time, which allows- reacting in multiple ways into changed energy conditions.

In case of a forthcoming short-term reduction of the availability of the energy supply means - for example based on an incoming cloud front reducing the availability of solar power - the physical production process is optimized such that it completes production blocks faster and that a time span with lower energy consumption or completely without production is obtained while having still the same production output. This obtained time span during which lower or no production occurs is placed within the upcoming period of reduced energy availability. In this way, the deviation of the real availability of the energy supply means from the scheduled availability is compensated at least in part therewith in an advantageous way.

Similarly, in case of an increased availability of the energy supply means compared with the scheduled availability, the production process can be optimized for reduced time, taking advantage of the excess energy supply, and building up a buffer of time that can be utilized later, ideally during a period of reduced energy supply.

A respective hardware component within a meltshop for optimizing the physical production process might be for example a device for electromagnetic stirring, which provides tangible benefits with little effort. The equipment enables more homogenous stirring reducing temperature gradients resulting in reduced power consumption and power-on time.

Another suitable way to influence the melting process within a meltshop is the use of a control technology comprising some hardware components that anticipates arc behavior and controls thyristor valves to deliver a fast compensating response. This improves the arc stability and increases possible furnace MW power-in and can thus increase the steel production. Through a 10% higher tap voltage this technology results in faster melt cycles at an Electric Arc Furnace (EAF). The technology can increase the production by up to one additional heat cycle per day. ylt also reduces through faster cycle time the energy losses caused by thermal radiation.

The characteristic value depends in principle on the scheduled long-term availability, the estimated short-term availability which considers for example the weather forecast for the next 2 hours, and the real actual availability. Based on those data it is possible to determine forthcoming respectively actual deviations from the scheduled availability. Basically the characteristic value can be translated into the information whether it is useful to actually optimize production concerning time, to optimize production concerning efficiency or to place the anticipatory obtained time spans without production.

Further software systems are typically closely connected to the optimization hardware and will be responsible to update the energy availability, to change between various energy forms (including conversions) and update the detailed production plan to accommodate changed requirements and conditions. The software systems can use the time dynamics that is increased by the above hardware components through a flexibility pool. This can be used to both affect the processing times as well as energy consumption levels, which are linked to each other through the physical process. There are options to run the production (within the limits allowed by the flexibility pool) fast or slow and in high and low energy-intensive modes. This increases the potential to adapt a highly energy consuming process to its bounding constraints.

The buffers can be typically up to 15-20%, which provides savings potential in terms of the amount of energy consumed. The optimization can be based on mathematical algorithms or rule-based heuristics.

The method according to the invention is also useful in case of a delay of the production process as such. Hence the energy consumption of the delayed production process over the time is aimed to be held comparable to the energy consumption of the production process as estimated for determination of the long-term schedule of the energy supply means.

Thus this invention combines hardware equipment and control technologies, increasing the hardware performance which through coordinated optimization solutions increases the flexibility for industrial demand-side control. By collaboration of several systems the system creates flexibility. As a result the lowered energy consumption contributes to reducing CO2 emissions at the energy supply means and increases the grid stability by better following the estimated energy consumption curves.

In a further embodiment of the invention the production means are optimized and scheduled such that their total energy consumption is - at least within a given time-span - in-line with the long-term schedule of the availability of the energy supply means. The method according to the invention gives flexibility concerning time for preferably each of the production means. By scheduling and optimizing the different production means individually with respect to the superordinated optimization criterion of total energy consumption, the flexibility of the production system is increased once again. Of course, in case of enduring respective deviations of the actual availability from the scheduled availability of the energy supply means the potential of the method of the invention will be limited to a certain time-span.

According to a further embodiment of the invention at least one of the energy supply means is based on a regenerative energy source such as wind or solar. As mentioned before, the availability of regenerative energy supply means is subject to a short-term deviation from its scheduled long-term availability. Thus the method according to the invention is highly suitable to schedule and optimize a production process reacting to respective deviations.

According to a further embodiment of the invention at least one of the production means is related to a hardware component able to increase the efficiency of a production process, in particular electromagnetic stirring. Electromagnetic stirring equipment provides a high potential to become optimized concerning more homogenous stirring reducing temperature gradients resulting in reduced power consumption and power-on time.

According to a further embodiment of the invention at least one of the production means is related to an energy-intensive process such as the melting process in metals industry. The melting process in metals industry is often based on an arc. As mentioned before, hardware solutions and control solutions are available, which allow the optimization of the arc as well as a faster melting process and which are highly suitable to be used within the frame of this invention.

Typically, superordinated control software for melt shop schedule optimization plans the overall production of a steel plant for 2-3 days. It synchronizes the production to ensure a smooth production and minimize e.g. inconvenient energy consumption patterns and cooling (energy losses) of intermediates while optimizing the make span (total production time) for maximum productivity. One of the most important tasks is to ensure continuous casting sequences. Respective software also uses min-max processing times if provided and if given a range it always selects the most suitable timings.

According to a further embodiment of the invention, the method for scheduling a production process is embedded in a superordinated long-term optimization system. The method according to the invention has a short time constant in between for example 2 hours down to a few minutes. The flexibility of the solution according to the invention gives increased flexibility for the long-term optimization system to react accordingly on short-term deviations on the scheduled availability.

According to a further embodiment of the invention, energy supply means are foreseen to supply further electrical loads except the production means. Thus the production system as such (without the energy supply means) can be seen as one electrical load within a group of further electrical loads, which optionally is used to balance the overall load curve to the scheduled availability of the energy supply means.

According to another embodiment of the invention the energy supply means are distributed within an electrical energy supply network. Thus the production system as such (without the energy supply means) is part of a larger network with a larger number of distributed energy supply means. In this case the characteristic value describing the availability of the distributed energy supply means is provided preferably from a superordinated control system for the energy supply means. This characteristic value might also become presented to further production systems which are supplied the respective energy supply means.

Further advantageous embodiments of the invention are mentioned in the dependent claims.

The invention will now be further explained by means of an exemplary embodiment and with reference to the accompanying drawings, in which:
- Figure 1: shows an exemplary production system,
- Figure 2: shows exemplary resource consumption of a production block dependent on optimization,
- Figure 3: shows examples for optimization of resource consumption of production blocks,
- Figure 4: shows a first example for production schedule without optimization,
- Figure 5: shows a second example for production schedule with optimization and
- Figure 6: shows a third example for production schedule with optimization.

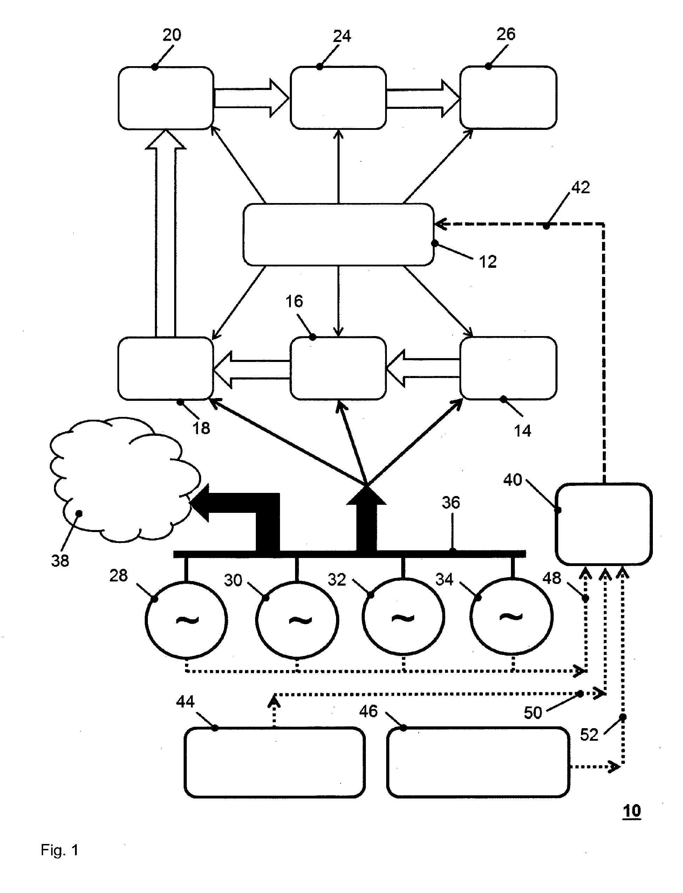

Fig. 1 shows an exemplary production system 10 with respective energy supply means 28, 30, 32, 34. A calculation unit 12, in this case an industrial personal computer, is connected to respective production means 14, 16, 18, 20, 24, 26 of a steel melting shop and foreseen to control them. The production means 14, 16, 18, 20, 24, 26 comprise additional hardware equipment, which makes it possible to optimize the physical production process behind them either concerning a reduced time or an improved efficiency. The kind of optimization is provided by the calculation unit 12, where several steps of the method according to the invention are performed by respective planning software. The production means are typically working blockwise, for example a certain amount of metal is melted within an arc furnace in a certain time. Afterwards the melted metal is transported to a subsequent production means, as indicated with the arrows inbetween the production means 14, 16, 18, 20, 24, 26. Then the next melt is prepared in the same way.

A characteristic value is provided to the calculation unit as indicated with the arrow 42. The characteristic value is an indicator, whether the actual respectively short-term availability of the energy supply means 28, 30, 32, 34 is higher or lower than the scheduled availability respectively is corresponding thereto. Dependent on this value and optionally superordinated optimization criteria the calculation unit 12 determines for each of the production means 14, 16, 18, 20, 24, 26, whether the individual production process is optimized concerning time and/or efficiency and at what time spans the respective production means 14, 16, 18, 20, 24, 26 is activated or not.

The characteristic value is provided by respective providing means 40, in this case a computer. The calculation means 40 are foreseen to determine this value from a provided actual availability 48 of the energy supply means 28, 30, 32, 34, a provided long-term schedule 50 for the energy supply means 28, 30, 32, 34 and a provided environmental condition forecast 52, which includes for example a short-term weather forecast. Thus it is possible to determine also an estimated short-term availability of the energy supply means 28, 30, 32, 34 and respective deviations from the scheduled availability. The long term schedule 50 is provided by respective means 44 and the weather forecast by respective means 46, in both cases for example a respective computing unit.

The energy supply 28, 30, 32, 34 means are connected to an electrical energy network 36, which is integrated in a further network part 38 with further loads and energy supply means. By optimizing and scheduling the production means 14, 16, 18, 20, 24, 26 according to the method of the invention, the load curve of the production means 14, 16, 18, 20, 24, 26 can adapted towards the real availability of the energy supply means 28, 30, 32, 34, especially in case of an deviation of the real availability 48 from the long-term scheduled availability 44.

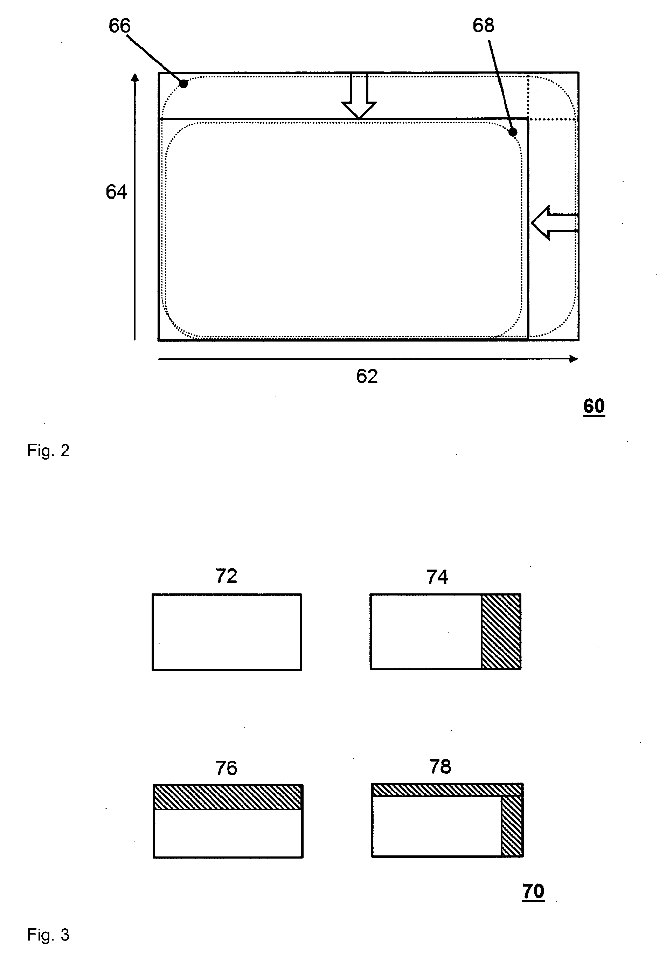

Fig. 2 shows exemplary resource consumption of a production block dependent on optimization in a sketch 60. Dependent on one of two optimization criteria a production block, for example the production of a certain amount of melted metal in metal industry, the melting process can either be optimized concerning time 62 or concerning efficiency 64 or optional also concerning both criteria. Dependent on the degree of optimization, the required resources, for example energy consumption, are reduced from a non-optimized level 66 to an optimized level 68.

Fig. 3 shows respective examples for optimization of resource consumption of production blocks in a sketch 70. A block with the number 72 is not optimized at all, a block 74 is optimized concerning time, a block 76 is optimized concerning efficiency and a block 78 is optimized concerning both criteria.

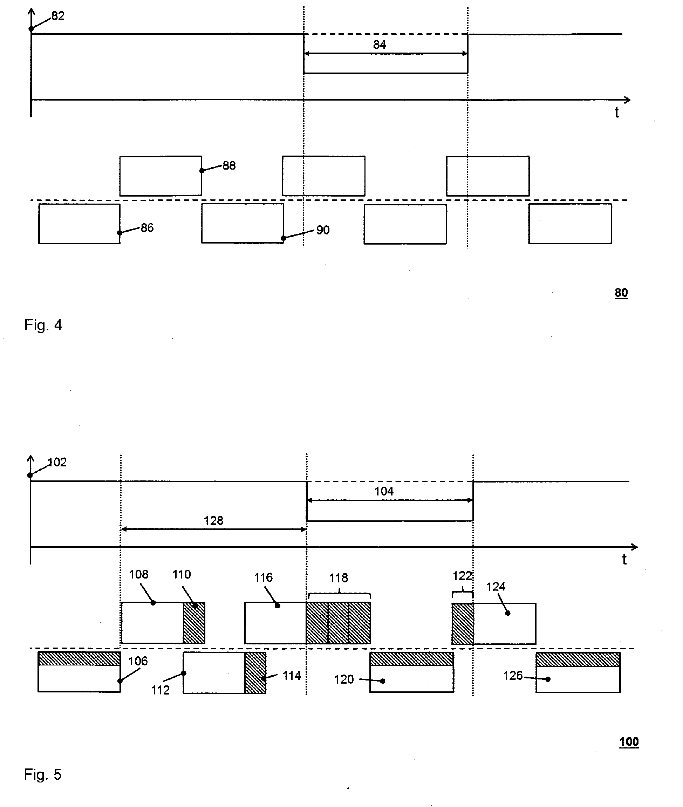

Fig. 4 shows a first example 80 for a block-oriented production schedule *without optimization.* In the upper graph availability 82 of energy supply over the time is shown. Except for a time-span 84 with reduced availability, the real availability corresponds to the scheduled availability. The time span 84 might last for example 1,5 hours.

In the lower graph a sequence of production blocks 86, 88, 90, for example melting of a certain amount of steel within an arc furnace, is shown. The surface of such a block 86, 88, 90 might correspond in principal to the consumption of resources which are required for the respective blocks 86, 88, 90. In this example no optimization of the physical process of the respective production blocks 86, 88, 90 is foreseen and a subsequent block is initiated when the proceeding block has been finished.

Within the time-span 84 of reduced availability of energy supply, in particular electrical energy, is unchanged compared to the remaining time with scheduled energy consumption. To meet the unchanged electricity demand of the production means anyhow, more energy supply needs to be long-term scheduled than required according to the estimated load curve. This will lead to an energy dumping in a disadvantageous way.

Fig. 5 shows a second example 100 for a block-oriented production schedule with optimization. In the upper graph availability 102 of energy supply means over the time is shown. Except a time-span 104 with reduced availability, the availability corresponds to the scheduled availability. The time span 104 might last for example 2 hours. An exemplary short-term time-span 128, for example 2 hours, is taking place directly before the time span 104. The short-term time-span 128 indicates, that the forthcoming time-span 104 of reduced availability is expected, which differs from the long-term schedule. This might be caused for example by an incoming cloud front which is expected to reduce the availability of respective solar cells for example.

Up to this moment, where the reduced availability is not yet expected, the production means are optimized concerning efficiency, as indicated with a production block 106. Thus reduced energy consumption or an increased quality of the production process is obtained, for example. From this moment, when the forthcoming reduced availability 104 is expected, the subsequent production blocks 108, 112, 116 are optimized concerning time, such that a respective time-span 110, 114 is obtained without production, whereas a respective production block still has the same output as in the not optimized state. The shortened production blocks 108, 112, 116 are scheduled in a sequence without interruption, so that as sum of the respective obtained time-spans 110, 114, 116 a larger-time span 118 without production respectively energy consumption is obtained.

The time-span 118 is placed after the expected reduced short-term availability has begun, so the load curve of the production means has been adapted to the temporarily reduced availability of energy supply means. After the time-span 118 without production has passed, a subsequent production block 120 is scheduled. In this time-span the load curve is indeed higher than the availability of energy supply means. In expectation of the end of the time-span of reduced availability 104 the subsequent production block 124 is optimized concerning time. After the time-span with reduced availability the production means are optimized concerning efficiency again, as indicated with the production block 126.

Anyhow, considering that energy supply means and respective loads are typically connected to a meshed energy supply network it can be assumed, that other production means of other plants are available, which can be scheduled by a superordinated planning system in that way, that their respective time without production is scheduled directly after the time span 118, so that in an overall consideration the total time-span 104 with reduced availability is covered by respective time-spans of respective production means without production.

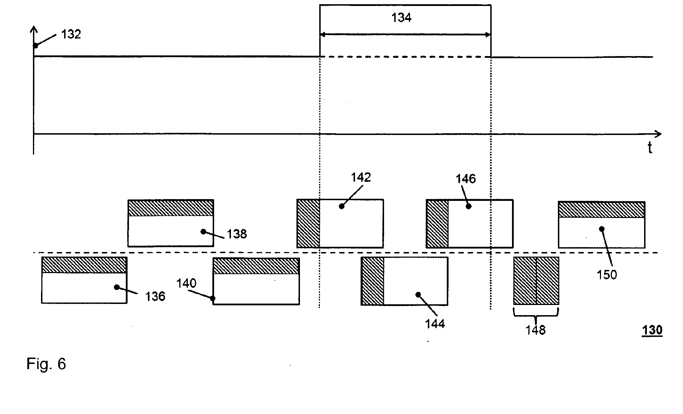

Fig. 6 shows a third example for production schedule with optimization. In the upper graph availability 132 of energy supply means over the time is shown. Except a time-span 134 with increased availability the availability corresponds to the scheduled availability. The time span 134 might last for example 2,5 hours. Before the time-span 134 of increased availability production blocks 136, 138, 140 are optimized concerning efficiency. During the time-span 134 of increased availability respective production blocks 142, 144, 146 are optimized concerning time. Thus a timespan 148 without production is obtained anticipatory which is placed in the time-span after the increased availability, preferably in a time-span with a forthcoming reduced availability of the energy supply means. After placing the time-span 148 without production regular production blocks 150 optimized concerning efficiency will start. By this anticipatory gaining of a time-span without production potential forthcoming time-spans with reduced availability of energy supply means can be compensated in an advantageous way. Including a superordinated planning system the optimization of different production means in a distributed energy supply system can be coordinated.

### List of reference signs

- 10: exemplary production system
- 12: calculation unit
- 14: first production means
- 16: second production means
- 18: third production means
- 20: fourth production means
- 24: fifth production means
- 26: sixth production means
- 28: first electrical energy supply means
- 30: second electrical energy supply means
- 32: third electrical energy supply means
- 34: forth electrical energy supply means
- 36: electrical energy network
- 38: network part with further electrical loads
- 40: means for providing characteristic value
- 42: provided characteristic value
- 44: long-term scheduling means
- 46: environmental condition forecast means
- 48: provided actual availability of energy supply means
- 50: provided long-term schedule for energy supply means
- 52: provided environmental condition forecast
- 60: resource consumption of a production block dependent on optimization
- 62: optimization criterion time
- 64: optimization criterion efficiency
- 66: resource consumption of production block without optimization
- 68: resource consumption of production block with optimization
- 70: examples for optimization of resource consumption of production blocks
- 72: production block without optimization
- 74: production block with optimization concerning first criterion
- 76: production block with optimization concerning second criterion
- 78: production block with optimization concerning first and second criterion
- 80: first example for production schedule without optimization
- 82: availability of energy supply means
- 84: time span of reduced availability compared with long-term schedule
- 86: first production block of production schedule
- 88: second production block of production schedule
- 90: third production block of production schedule
- 100: second example for production schedule with optimization
- 102: availability of energy supply means
- 104: time span of reduced availability compared with long-term schedule
- 106: first production block of production schedule
- 108: second production block of production schedule
- 110: obtained time span of second production block
- 112: third production block of production schedule
- 114: obtained time span of third production block
- 116: fourth production block of production schedule
- 118: obtained time span resulting from combined timespan reductions of second, third and fourth third production block
- 120: fifth production block of production schedule
- 122: obtained time span of third production block
- 124: sixth production block of production schedule
- 126: seventh production block of production schedule
- 128: exemplary short-term time span
- 130: third example for production schedule with optimization
- 132: availability of energy supply means
- 134: time span of increased availability compared with long-term schedule
- 136: first production block of production schedule
- 138: second production block of production schedule
- 140: third production block of production schedule
- 142: fourth production block of production schedule
- 144: fifth production block of production schedule
- 146: sixth production block of production schedule
- 148: obtained time span of fourth and fifth production block
- 150: seventh production block of production schedule

## Claims

1. Method for scheduling a production process within a production system (10), the system comprising:
• a calculation unit (12) for performing the steps of the method at least in part,
• production means (14, 16, 18, 20, 24, 26) with the capability to get the physical production process behind them optimized either concerning a decreased production time (62) or an increased efficiency (64),
• electrical energy supply means (28, 30, 32, 34) for supplying at least the production means (14, 16, 18, 20, 24, 26) with electrical energy,
• wherein the availability (82, 102, 132) of the energy supply means (28, 30, 32, 34) might differ (84, 104, 134) in short-term (128) from a respective long-term schedule,
**characterized by** the following steps:
• continuously providing a characteristic value (42) for describing the actual availability (48), the expected forthcoming short-term availability (52) and at least in part the scheduled long-term availability (50) of the energy supply means (28, 30, 32, 34) to the calculation unit,
• in case of an unscheduled forthcoming (a) reduction, or (b) increase in short-term availability of the energy supply means: optimizing at least one of the production means (14, 16, 18, 20, 24, 26) concerning a decreased production time instead of optimizing concerning increased efficiency, so that a time-span (110, 114, 122) with reduced or without energy consumption from the at least one production means (14, 16, 18, 20, 24, 26) is obtained therewith,
• scheduling the production means (14, 16, 18, 20, 24, 26) in that way, that the time span (110, 114, 122) with reduced or without energy consumption preferably takes place (a) in times of reduced energy supply means or (b) after times of increased availability of energy supply means.

2. Method according to claim 1, **characterized in that** the production means (14, 16, 18, 20, 24, 26) are optimized and scheduled such that their total energy consumption is - at least within a given time-span - in-line with the long-term schedule of the availability of the energy supply means (28, 30, 32, 34).

3. Method according to claim 1 or 2, **characterized in that** at least one of the energy supply means (28, 30, 32, 34) is based on a regenerative energy source such as wind or solar.

4. Method according to any of the previous claims, **characterized in that** at least one of the production means (14, 16, 18, 20, 24, 26) is related to electromagnetic stirring.

5. Method according to any of the previous claims, **characterized in that** at least one of the production means (14, 16, 18, 20, 24, 26) is related to a melting process in metals industry.

6. Method according to any if the previous claims, **characterized in that** it is embedded in a superordinated long-term optimization system.

7. Method according to any if the previous claims, **characterized in that** the energy supply means are foreseen to supply further electrical loads (38) except the production means (14, 16, 18, 20, 24, 26).

8. Method according to any if the previous claims, **characterized in that** the energy supply means are distributed within an electrical energy supply network (36).
